# EUROPEAN PATENT APPLICATION

(11) **EP 3 657 239 A1**
(43) Date of publication of application: **27.05.2020**
(21) Application number: 18796816.9
(22) Date of filing: 31.01.2018
(51) Int. Cl.: G02F 1/1343, G02F 1/1362

(54) **PIXEL STRUCTURE, ARRAY SUBSTRATE, AND LIQUID-CRYSTAL DISPLAY DEVICE**

(30) Priority: 21.07.2017 CN 201710602719
(71) Applicant: BOE Technology Group Co., Ltd., Beijing 100015 (CN); Beijing BOE Display Technology Co., Ltd., Beijing 100176 (CN)
(72) Inventor: QU, Yingying, Beijing 100176 (CN)
(74) Representative: Gesthuysen, Michael
(86) International application number: PCT/CN2018/074677
(87) International publication number: WO 2019/015295

(57) **Abstract**

The embodiments of the present disclosure provide a pixel structure, an array substrate, and a liquid crystal display device, which relate to the field of display technology, and provide an electrode structure design scheme for reducing the color shift phenomenon of the liquid crystal display device. The pixel structure includes a first electrode and a second electrode for driving liquid crystal molecules to rotate. The first electrode includes multiple strip-shaped first sub-electrodes; the pixel structure is divided into *n* display areas, *n* is a positive integer greater than or equal to 2; and each display area is provided with a plurality of first sub-electrodes. At least one of a distance between two directly adjacent first sub-electrodes, a width of each first sub-electrode, and an inclination angle of each first sub-electrode is not a constant; the inclination angle is an angle between an extending direction of the first sub-electrode and a reference direction.

## Description

### RELATED APPLICATIONS

The present application claims the benefit of Chinese Patent Application No. 201710602719.6, filed on July 21, 2017, the entire disclosures of which are incorporated herein by reference.

### TECHNICAL FIELD

The present disclosure relates to the field of display technology, and particularly to a pixel structure, an array substrate and a liquid crystal display device.

### BACKGROUND

With the rapid development of display technology, liquid crystal display (LCD) has been widely used due to its advantages of low power consumption, light weight, and high display quality. At present, common wide viewing angle liquid crystal display panels include in-plane switching (IPS) mode liquid crystal display panel and advanced super dimension switch (ADS) mode liquid crystal display panel.

In the IPS mode liquid crystal display panel, the pixel electrode and the common electrode are alternately arranged in the same layer. In the ADS mode liquid crystal display panel, the pixel electrode and the common electrode are arranged in different layers. Both the IPS mode liquid crystal display panel and the ADS mode liquid crystal display panel drive the liquid crystal molecules to rotate by applying a transverse electric field generated between the pixel electrode and the common electrode.

However, both the IPS mode liquid crystal display panel and the ADS mode liquid crystal display panel are prone to color shift. Especially in oblique viewing angles, the color shift phenomenon is more serious. This is because, on the one hand, in the case of oblique viewing angle, the non-orthogonal arrangement of the upper and lower polarizers causes light leakage, and on the other hand, the rod-like structure of the liquid crystal molecule also causes color shift problems.

### SUMMARY

The embodiments of the present disclosure provide a pixel structure, an array substrate, and a liquid crystal display device.

According to an aspect of the present disclosure, a pixel structure is provided. The pixel structure includes: a first electrode and a second electrode for driving liquid crystal molecules to rotate; the first electrode includes multiple strip-shaped first sub-electrodes; the pixel structure is divided into *n* display areas, *n* is a positive integer greater than or equal to 2; and each display area is provided with a plurality of first sub-electrodes; and at least one of a distance between two directly adjacent first sub-electrodes, a width of each first sub-electrode, and an inclination angle of each first sub-electrode is not a constant; the inclination angle is an angle between an extending direction of the first sub-electrode and a reference direction.

Optionally, in the same display area, the distance between two directly adjacent first sub-electrodes is a constant, and widths of the plurality of first sub-electrodes are equal; for different display areas in *m* display areas, at least one of a distance between two directly adjacent first sub-electrodes, a width of each first sub-electrode, and an inclination angle of each first sub-electrode is not a constant; 2≤*m*≤n*,* and *m* is a positive integer.

Optionally, in the same display area, at least one of a distance between directly adjacent first sub-electrodes, a width of each first sub-electrode, and an inclination angle of each first sub-electrode is not a constant.

Further optionally, in the same display area, inclination angles of the first sub-electrodes are equal; two sides of each first sub-electrode are parallel along the extending direction of the first sub-electrode; the distance between directly adjacent first sub-electrodes is not a constant, and/or the widths of the first sub-electrodes are not equal.

Further optionally, for different display areas in *t* display areas, inclination angles of the first sub-electrodes are different; 2≤*t*≤*n,* and *t* is a positive integer.

Optionally, the second electrode includes multiple strip-shaped second sub-electrodes; the first sub-electrode and the second sub-electrode are alternately disposed in the same layer.

Optionally, the first electrode and the second electrode are disposed in different layers; the second electrode is a planar electrode. Alternatively, the second electrode includes multiple strip-shaped second sub-electrodes, and a second sub-electrode is disposed in a gap between two first sub-electrodes.

Optionally, the multiple first sub-electrodes are electrically connected by an auxiliary electrode; the auxiliary electrode and the first electrode are disposed in the same layer; a material of the auxiliary electrode is the same as a material of the first electrode.

Optionally, a material of the first electrode or a material of the second electrode is at least one of ITO or IZO.

Optionally, in the same display area, all angles of the plurality of first sub-electrodes rotating clockwise to the reference direction are obtuse angles or acute angles; the reference direction is an extending direction of a gate line connected to the pixel structure.

According to another aspect of the present disclosure, an array substrate is provided. The array substrate includes the pixel structure according to any one of the above mentioned embodiments.

According to yet another aspect of the present disclosure, a liquid crystal display device is provided. The liquid crystal display device includes the array substrate according to the above mentioned embodiment.

The embodiments of the present disclosure provide a pixel structure, an array substrate, and a liquid crystal display device. The pixel structure includes a first electrode and a second electrode. The first electrode includes multiple strip-shaped first sub-electrodes. In the embodiments of the present disclosure, at least one of a distance between two directly adjacent first sub-electrodes, a width of each first sub-electrode, and an inclination angle of each first sub-electrode is not a constant. Since any one of the above parameters may affect the rotation state of the liquid crystal molecules, at least one of the distance between two directly adjacent first sub-electrodes, the width of each first sub-electrode, and the inclination angle of each first sub-electrode may be adjusted to independently control the electric field direction or the electric field intensity of the individual regions, so that the rotation state of the liquid crystal molecules can be changed to compensate the difference in phase difference of the liquid crystal molecules, thereby reducing the color shift phenomenon.

### BRIEF DESCRIPTION OF THE DRAWINGS

In order to more clearly illustrate the technical solutions in embodiments of the disclosure or in the prior art, the appended drawings needed to be used in the description of the embodiments or the prior art will be introduced briefly in the following. Obviously, the drawings in the following description are only some embodiments of the disclosure, and for those of ordinary skills in the art, other drawings may be obtained according to these drawings under the premise of not paying out creative work.
Fig. 1 is a cross-sectional schematic diagram of an IPS mode pixel structure according to an embodiment of the present disclosure;
Fig. 2 is a cross-sectional schematic diagram of an ADS mode pixel structure according to an embodiment of the present disclosure;
Fig. 3 is a structural schematic diagram of a pixel structure according to an embodiment of the present disclosure;
Fig. 4 is a structural schematic diagram of a pixel structure according to another embodiment of the present disclosure;
Fig. 5(a) is a structural schematic diagram of a pixel structure according to yet another embodiment of the present disclosure;
Fig. 5(b) is a structural schematic diagram of a pixel structure according to still another embodiment of the present disclosure;
Fig. 6(a) is a structural schematic diagram of a pixel structure according to another embodiment of the present disclosure;
Fig. 6(b) is a structural schematic diagram of a pixel structure according to another embodiment of the present disclosure;
Fig. 7(a) is a structural schematic diagram of a pixel structure according to another embodiment of the present disclosure;
Fig. 7(b) is a structural schematic diagram of a pixel structure according to another embodiment of the present disclosure;
Fig. 7(c) is a structural schematic diagram of a pixel structure according to another embodiment of the present disclosure;
Fig. 8 is a structural schematic diagram of a pixel structure according to an embodiment of the present disclosure; and
Fig. 9 is a structural schematic diagram of an array substrate according to an embodiment of the present disclosure.

### DETAILED DESCRIPTION OF THE DISCLOSURE

In the following, the technical solutions in embodiments of the disclosure will be described clearly and completely in connection with the drawings in the embodiments of the disclosure. Obviously, the described embodiments are only part of the embodiments of the disclosure, and not all of the embodiments. Based on the embodiments in the disclosure, all other embodiments obtained by those of ordinary skills in the art under the premise of not paying out creative work pertain to the protection scope of the disclosure.

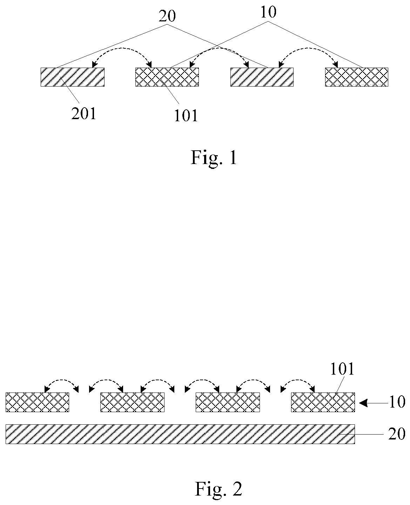

Embodiments of the present disclosure provide a pixel structure. The pixel structure may be especially used for an IPS mode liquid crystal display panel or an ADS mode liquid crystal display panel. For example, the pixel structure may be an IPS mode pixel structure as shown in Fig. 1 or an ADS mode pixel structure as shown in Fig. 2.

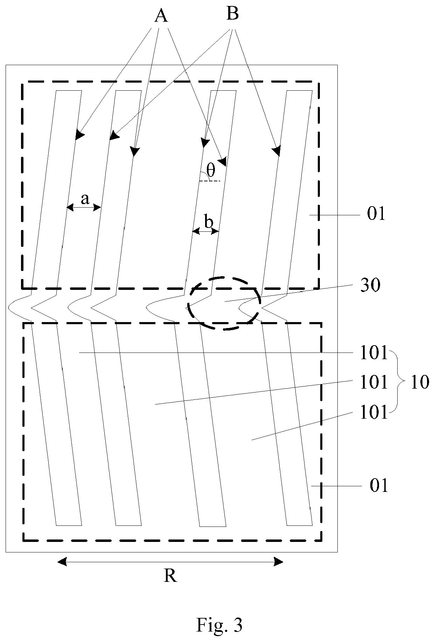

As shown in Fig. 1 to Fig. 8, the pixel structure includes: a first electrode 10 and a second electrode 20 for driving liquid crystal molecules to rotate; the first electrode 10 includes multiple strip-shaped first sub-electrodes 101. The pixel structure is divided into *n* display areas 01, *n* is a positive integer greater than or equal to 2. Each display area 01 is provided with a plurality of first sub-electrodes 101. At least one of a distance between two directly adjacent first sub-electrodes 101, a width *a* of each first sub-electrode 101, and an inclination angle *θ* of each first sub-electrode 101 is not a constant. The inclination angle *θ* is an angle between an extending direction of the first sub-electrode 101 and a reference direction *R.* Referring to Fig. 3, the pixel structure shown in Fig. 3 is divided into two display areas 01. The angles of the plurality of first sub-electrodes 101 located in the display area 01 of the upper half of the pixel structure rotating clockwise to the reference direction *R* are acute angles. The angles of the plurality of first sub-electrodes 101 located in the display area 01 of the lower half of the pixel structure rotating clockwise to the reference direction R are obtuse angles.

In the embodiments of the present disclosure, at least one of the distance *b* between two directly adjacent first sub-electrodes 101 (i.e., the width of the slit), the width *a* of each first sub-electrode 101, and the inclination angle *θ* of each first sub-electrode 101 (i.e., the slit angle) is not a constant.

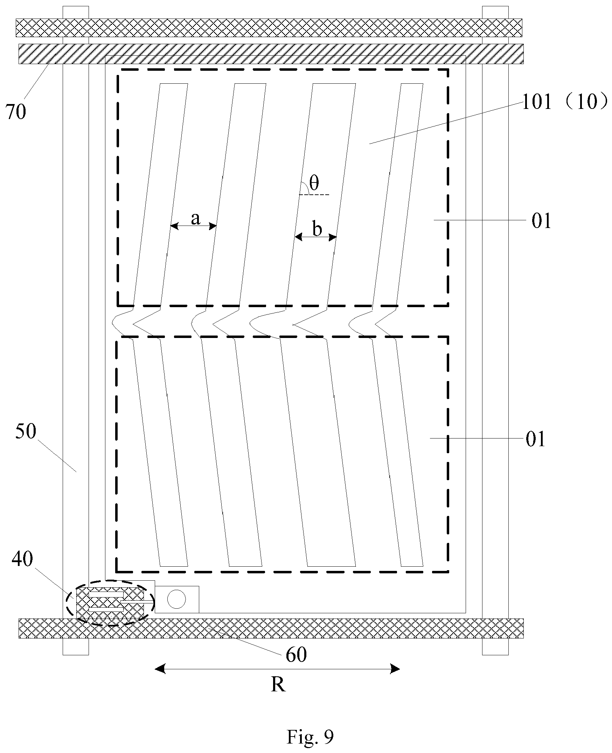

Optionally, as shown in Fig. 9, in the same display area 01, all angles of the plurality of first sub-electrodes 101 rotating clockwise to the reference direction are obtuse angles or acute angles; the reference direction is an extending direction of a gate line 60 connected to the pixel structure.

The principle of reducing the color shift phenomenon in the embodiments of the present disclosure mainly lies in that the distance b between the directly adjacent first sub-electrodes 101 or the width *a* of each first sub-electrode 101 affects the electric field intensity, the inclination angle *θ* of each first sub-electrode 101 affects the direction of the electric field, while the electric field strength and the direction of the electric field affect the rotation state of the liquid crystal molecules. Therefore, at least one of the distance *b* between two directly adjacent first sub-electrodes 101, the width *a* of each first sub-electrode 101, and the inclination angle *θ* of each first sub-electrode 101 may be adjusted to control the rotation state of the liquid crystal molecules. Based on this, in the actual design process of the pixel structure: the smaller the distance *b* between the directly adjacent first sub-electrodes 101, the smaller the phase difference of the liquid crystal molecules is; the smaller the width *a* of each first sub-electrode 101, the smaller the phase difference of the liquid crystal molecules is; the larger the inclination angle *θ* of each first sub-electrode 101, the smaller the phase difference of the liquid crystal molecules is. Therefore, the distance *b* between two directly adjacent first sub-electrodes 101, the width *a* of each first sub-electrode 101, and the inclination angle *θ* of each first sub-electrode 101 can be designed according to the difference in phase difference of the liquid crystal molecules. In this way, the electric field of the individual regions can be controlled independently, thereby independently controlling the rotation state of the liquid crystal molecules in the individual regions, compensating the difference in phase difference of the liquid crystal molecules and reducing the color shift phenomenon.

It should be noted that, first, the pixel structure may be divided into two display areas 01, or may be divided into three or more display areas 01, which should be reasonably divided according to the size of the pixel structure. In the drawings of the present disclosure, the pixel structure is divided into two display areas 01 as an example for illustration.

Second, for the first electrode 10 and the second electrode, the first electrode 10 may be a common electrode, and the second electrode may be a pixel electrode; alternatively, the first electrode 10 may be a pixel electrode, and the second electrode may be a common electrode. Further, the shape of the second electrode is not limited, and the second electrode may be a planar electrode, or the second electrode may include a plurality of strip-shaped sub-electrodes.

Third, in the embodiment of the present disclosure, the distance *b* between the directly adjacent first sub-electrodes 101 and the width *a* of the first sub-electrode 101 are measured in the reference direction.

Fourth, if the values of the distance at different positions between the directly adjacent first sub-electrodes 101 are not equal, the distance *b* between the directly adjacent first sub-electrodes 101 is considered not to be a constant. Similarly, if the values of the width at different positions of the first sub-electrode 101 are not equal (i.e., the two sides of the first sub-electrode 101 along the extending direction thereof are not parallel), the width *a* of the first sub-electrode 101 is considered not to be a constant.

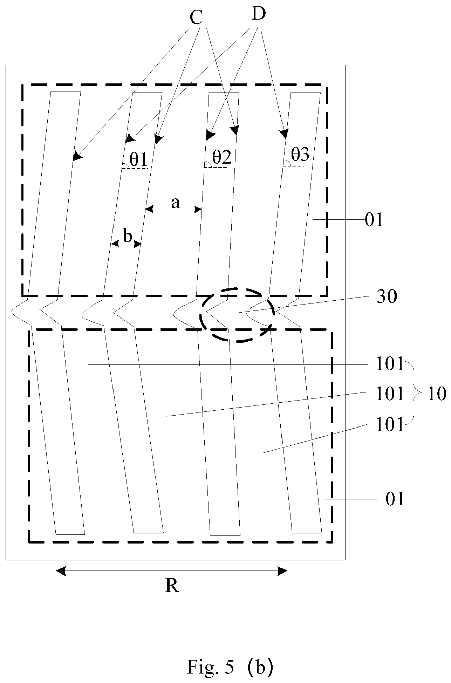

The inclination angle *θ* of the first sub-electrode 101 is an included angle between the extending direction of the first sub-electrode 101 and the reference direction, where the included angle refers to a smaller angle formed by the intersection of two lines. Based on this, the inclination angle *θ* of each first sub-electrode 101 should be an angle between the same side (e.g., left side or right side) of the first sub-electrode 101 along the extending direction thereof and the reference direction. In Fig. 5(b), the included angle between the right side of the first sub-electrode 101 and the reference direction is illustrated as an example.

If the angle between each side of the first sub-electrode 101 along the extending direction thereof and the reference direction is constant for all the first sub-electrodes 101, the inclination angles *θ* of the respective first sub-electrodes 101 are considered to be constant. Here, the angle between the left side of each first sub-electrode 101 along the extending direction thereof and the reference direction may be the same to the angle between the right side of each first sub-electrode 101 along the extending direction thereof and the reference direction (i.e., the two sides of the first sub-electrode 101 along the extending direction thereof are parallel to each other). Alternatively, these angles may also be different (i.e., the two sides of the first sub-electrode 101 along the extending direction thereof are not parallel to each other). For example, referring to Fig. 3, the angle between the left side of each first sub-electrode 101 along the extending direction thereof (the side indicated by the arrow *A* in Fig. 3) and the reference direction is constant, and the angle between the right side of each first sub-electrode 101 along the extending direction thereof (the side indicated by the arrow *B* in Fig. 3) and the reference direction is constant. The inclination angles *θ* of the respective first sub-electrodes 101 are thus equal to each other.

If the angle between a side of the first sub-electrode 101 along the extending direction and the reference direction is not a constant, it is considered that the inclination angles *θ* of the respective first sub-electrodes 101 are not equal. For example, referring to Fig. 5(b), if the angle between the left side of each first sub-electrode 101 along the extending direction thereof (the side indicated by the arrow *C* in Fig. 5(b)) and the reference direction is not constant, and/or the angle between the right side of the first sub-electrode 101 along the extending direction thereof (the side indicated by the arrow *D* in Fig. 5(b)) and the reference direction is not constant, then the inclination angles *θ* of the first sub-electrodes 101 are not equal.

Based on the above, in the same display area 01, the distance *b* between the directly adjacent first sub-electrodes 101, the width *a* of each first sub-electrode, and the inclination angle *θ* of each first sub-electrode 101 are respectively constant; however, for the first sub-electrodes located in different display areas 01, at least one of the distance *b* between the directly adjacent first sub-electrodes 101, the width *a* of each first sub-electrode, and the inclination angle *θ* of each first sub-electrode 101 is not a constant. Alternatively, in the same display area 01, one of the distance *b* between the directly adjacent first sub-electrodes 101, the width *a* of each first sub-electrode, and the inclination angle *θ* of each first sub-electrode 101 is not a constant.

Fifth, the materials of the first electrode 10 and the second electrode are not limited as long as they are transparent materials. Optionally, the material of the first electrode 10 or the second electrode may be at least one of ITO (Indium Tin Oxide) or IZO (Indium Zinc Oxide).

The embodiments of the present disclosure provide a pixel structure. The pixel structure includes a first electrode and a second electrode. The first electrode includes multiple strip-shaped first sub-electrodes. In the embodiments of the present disclosure, at least one of a distance between two directly adjacent first sub-electrodes, a width of each first sub-electrode, and an inclination angle of each first sub-electrode is not a constant. Since any one of the above parameters may affect the rotation state of the liquid crystal molecules, at least one of the distance between two directly adjacent first sub-electrodes, the width of each first sub-electrode, and the inclination angle of each first sub-electrode may be adjusted to independently control the electric field direction or the electric field intensity of the individual regions, so that the rotation state of the liquid crystal molecules can be changed to compensate the difference in phase difference of the liquid crystal molecules, thereby reducing the color shift phenomenon.

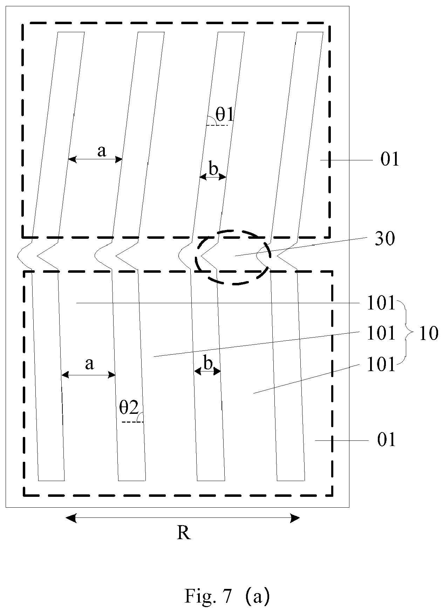

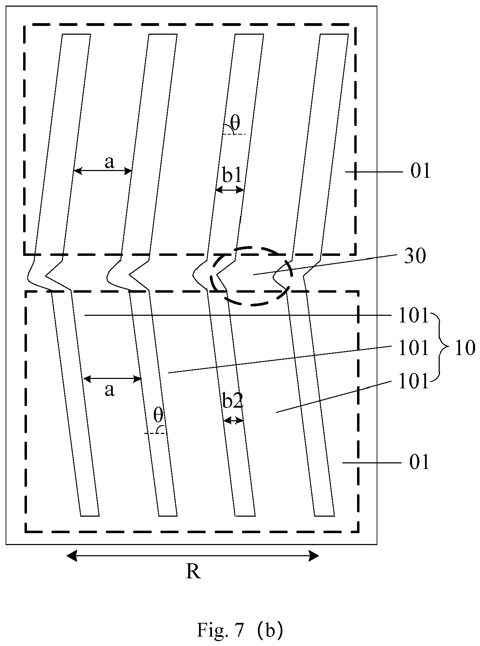

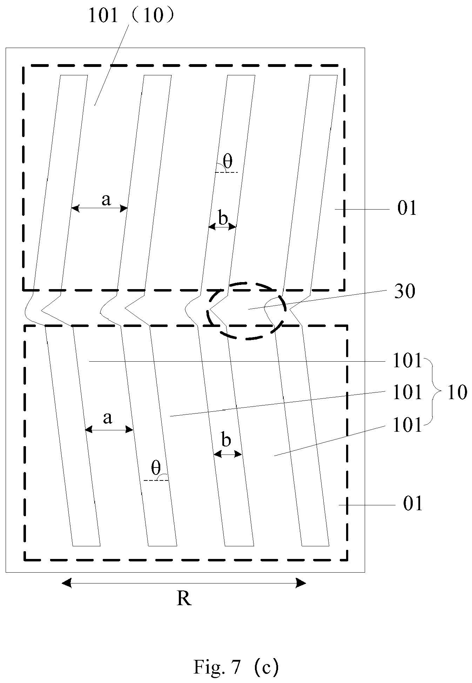

Optionally, as shown in Fig. 7(a), Fig. 7(b) and Fig. 7(c), in the same display area 01, the distance *b* between two directly adjacent first sub-electrodes 101 is a constant, and the widths *a* of the plurality of first sub-electrodes 101 are equal. In this case, in the same display area 01, the inclination angles *θ* of the respective first sub-electrodes 101 are the same.

For different display areas 01 in *m* display areas 01, at least one of a distance b between two directly adjacent first sub-electrodes 101, a width *a* of each first sub-electrode 101, and an inclination angle *θ* of each first sub-electrode 101 is not a constant; 2≤*m*≤n*,* and *m* is a positive integer.

In this embodiment, for different display areas 01, one of the distance *b* between the directly adjacent first sub-electrodes 101, the width *a* of each first sub-electrode 101, and the inclination angle *θ* of each first sub-electrode 101 may be not constant. Specifically, as shown in Fig. 7(a), for *m* different display areas 01, the distance *b* between the directly adjacent first sub-electrodes 101 is constant, the width *a* of the first sub-electrode 101 is constant, while the inclination angle *θ* of the first sub-electrode 101 is not constant, for example, *θ1*=20°, *θ2*=40°, *θ1*≠*θ2.* Alternatively, as shown in Fig. 7(b), for *m* different display areas 01, the inclination angle *θ* of the first sub-electrode 101 is constant, the width *a* of the first sub-electrode 101 is constant, while the distance *b* between the directly adjacent first sub-electrodes 101 is not constant, for example, *bl=6.5* µm, *b2*=5.6 µm, *b1*≠*b2.* Alternatively, as shown in Fig. 7(c), for m different display areas 01, the inclination angle *θ* of the first sub-electrode 101 is constant, the distance *b* between the directly adjacent first sub-electrodes 101 is constant, while the width *a* of the first sub-electrode 101 is not constant.

Based on this, in some embodiments, for different display areas 01, two or all of the distance *b* between the directly adjacent first sub-electrodes 101, the width *a* of each first sub-electrode 101, and the inclination angle *θ* of each first sub-electrode 101 are not constant (not shown in the drawings of the embodiments of the present disclosure).

Here, in the same display area 01, the distance *b* between the directly adjacent first sub-electrodes 101 is constant, and the width *a* of each first sub-electrode 101 is constant, the rotation state of the liquid crystal molecules in the same display area 01 is thus the same.

In the embodiment of the present disclosure, by setting at least one of the distance *b* between the directly adjacent first sub-electrodes 101 in different display areas 01, the width *a* of each first sub-electrode 101, and the inclination angle *θ* of each first sub-electrode 101 to be unequal, the rotation state of the liquid crystal molecules in different display areas 01 can be adjusted to compensate the difference in phase difference of the liquid crystal molecules.

Optionally, as shown in Fig. 3 - Fig. 6(b), in the same display area 01, at least one of the distance *b* between directly adjacent first sub-electrodes 101, the width *a* of each first sub-electrode 101, and an inclination angle *θ* of each first sub-electrode 101 is not a constant.

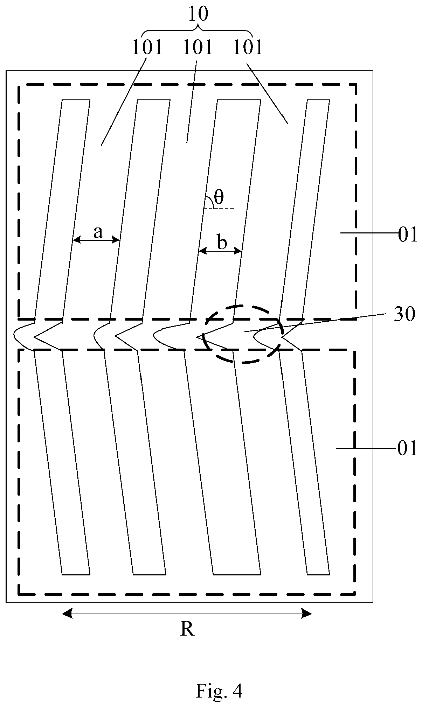

In this embodiment, in the same display area 01, one of the distance *b* between the directly adjacent first sub-electrodes 101, the width *a* of each first sub-electrode 101, and the inclination angle *θ* of each first sub-electrode 101 may be not constant. Specifically, as shown in Fig. 3, the distance *b* between the directly adjacent first sub-electrodes 101 is constant, the inclination angle *θ* of the first sub-electrode 101 is constant, while the width *a* of each first sub-electrode 101 is not constant. Alternatively, as shown in Fig. 4, the inclination angle *θ* of the first sub-electrode 101 is constant, the width *a* of each first sub-electrode 101 is constant, while the distance *b* between the directly adjacent first sub-electrodes 101 is not constant.

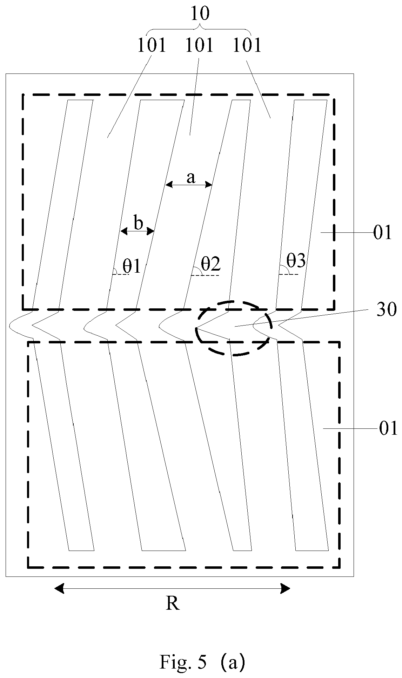

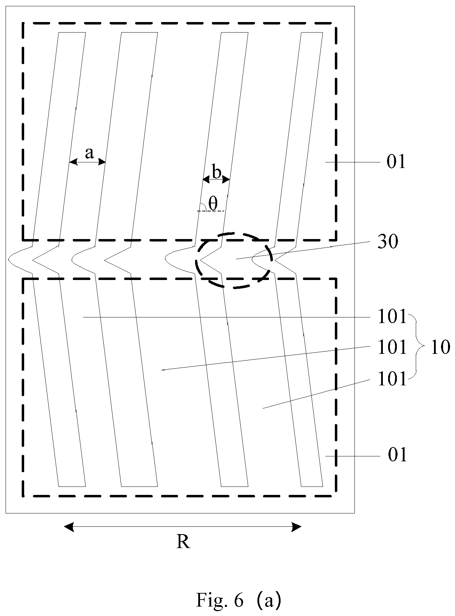

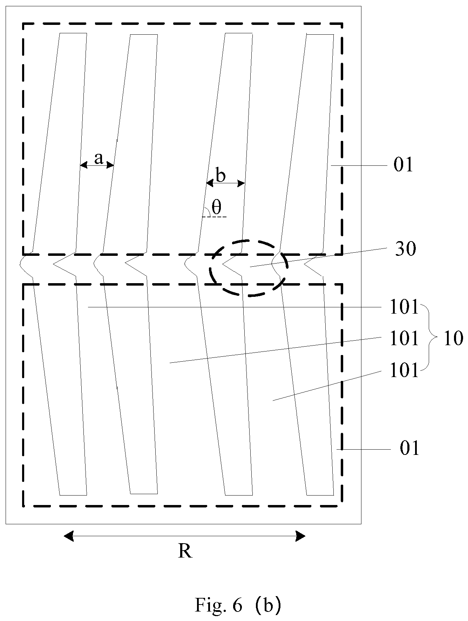

On the basis of this, in the same display area 01, two of the distance *b* between the directly adjacent first sub-electrodes 101, the width *a* of each first sub-electrode 101, and the inclination angle *θ* of each first sub-electrode 101 may be not constant. Specifically, as shown in Fig. 5(a), the inclination angles *θ* of the respective first sub-electrodes 101 are not equal (*θ1*≠*θ2*≠*θ3*), the width *a* of each first sub-electrode 101 is constant, and the distance *b* between the directly adjacent first sub-electrodes 101 is not constant. Alternatively, as shown in Fig. 5(b), the inclination angles *θ* of the respective first sub-electrodes 101 are not equal (*θ1*≠*θ2*≠*θ3*), the width *a* of each first sub-electrode 101 is not constant, the distance *b* between the directly adjacent first sub-electrodes 101 is constant. Alternatively, as shown in Figs. 6(a) and 6(b), the width *a* of each first sub-electrode 101 is not constant, the distance *b* between the directly adjacent first sub-electrodes 101 is not constant, and the inclination angles *θ* of the respective first sub-electrodes 101 are equal. In these embodiments, the angle between the left side of each first sub-electrode 101 along the extending direction thereof and the reference direction may be equal to the angle between the right side of each first sub-electrode 101 along the extending direction thereof and the reference direction as shown in Fig. 6(a); alternatively, these angles may be unequal as shown in Fig. 6(b).

Further optionally, in the same display area 01, all of the inclination angle *θ* of each first sub-electrode 101, the width *a* of each first sub-electrode 101, and the distance *b* between the directly adjacent first sub-electrodes 101 are not constant (not shown in the drawings of the embodiments of the present disclosure).

It should be noted that, in the same display area 01, at least one of the distance *b* between two directly adjacent first sub-electrodes 101, the width *a* of each first sub-electrode 101, and the inclination angle *θ* of each first sub-electrode 101 is not a constant. Therefore, in the same display area 01, the liquid crystal molecules have different rotation states.

In the embodiment of the present disclosure, by adjusting at least one of the distance *b* between the directly adjacent first sub-electrodes 101 in different display areas 01, the width *a* of each first sub-electrode 101, and the inclination angle *θ* of each first sub-electrode 101, the rotation state of the liquid crystal molecules in the same display areas 01 can be adjusted. In this way, the control of the liquid crystal molecules in a smaller area can be realized independently, the difference in phase difference of the liquid crystal molecules can be compensated more accurately, thereby reducing the color shift phenomenon.

Further optionally, as shown in Fig. 3, Fig. 4 and Fig. 6(a), in the same display area 01, the inclination angles *θ* of the first sub-electrodes 101 are equal; two sides of each first sub-electrode 101 are parallel along the extending direction of the first sub-electrode; the distance *b* between directly adjacent first sub-electrodes 101 is not a constant, and/or the widths *a* of the first sub-electrodes 101 are not equal.

Here, if the two sides of each first sub-electrode 101 are parallel along the extending direction thereof, then the width of each first sub-electrode 101 along the extending direction of the first sub-electrode 101 is constant.

For the embodiments in which the inclination angles *θ* of the first sub-electrodes 101 are equal, the distance *b* between the directly adjacent first sub-electrodes 101 may be not constant, and the width *a* of each first sub-electrode 101 may be constant, as shown in Fig. 4; alternatively, the width *a* of each first sub-electrode 101 may be not constant, and the distance *b* between the directly adjacent first sub-electrodes 101 may be constant, as shown in Fig. 3; alternatively, as shown in Fig. 6(a), .

It should be noted that, in the same display area 01, if the inclination angles *θ* of the respective first sub-electrodes 101 are equal, the directions of the electric field generated between the first sub-electrodes 101 and the second electrode are the same. Therefore, in the same display area 01, the liquid crystal molecules driven by the respective first sub-electrodes 101 and the second electrode have the same rotation angle.

Based on the above, in the embodiment of the present disclosure, in the same display area 01, by adjusting the distance *b* between the directly adjacent first sub-electrodes 101 and/or the width *a* of each first sub-electrode 101, the electric field intensity of the electric field generated by the first electrode 10 and the second electrode can be adjusted, so that the rotation angle of the liquid crystal molecules can be adjusted, thereby compensating the difference in phase difference of the liquid crystal molecules and reducing the color shift phenomenon. On the basis of this, since the distance *b* between the directly adjacent first sub-electrodes 101 and the width *a* of each first sub-electrode 101 can be easily adjusted during the practical manufacturing process, in the embodiments of the present disclosure, the distance *b* between the directly adjacent first sub-electrodes 101 and/or the width *a* of each first sub-electrode 101 are not constant.

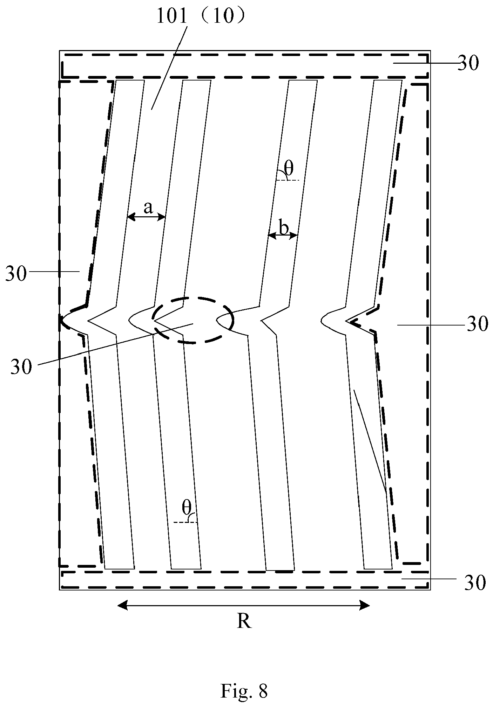

Based on the above, optionally, as shown in Fig. 8, for different display areas 01 in *t* display areas, the inclination angles *θ* of the first sub-electrodes are different from each other; 2≤*t*≤*n,* and *t* is a positive integer.

In this embodiment, in the same display area 01, the inclination angles *θ* of the first sub-electrodes 101 are the same, the rotation angles of the liquid crystal molecules are thus the same in the same display area 01; the inclination angles *θ* of the first sub-electrodes 101 located in different display areas 01 are different from each other, therefore, the liquid crystal molecules located in different display areas 01 have different rotation angles.

Here, in the same display area 01, the distance *b* between the directly adjacent first sub-electrodes 101 is constant, and the distance *b* between the first sub-electrodes 101 located in different display areas 01 may be constant or not constant; in the same display area 01, the width *a* of each first sub-electrode 101 is constant, and the widths *a* of the first sub-electrodes 101 located in different display areas 01 may be equal or not equal.

In the embodiment of the present disclosure, since the inclination angles *θ* of the first sub-electrodes 101 located in different display areas 01 are different, the first sub-electrodes 101 and the second electrode may form horizontal electric fields with different directions in different display areas 01. Based on this, by adjusting the inclination angles *θ* of the first sub-electrodes 101 in different display areas 01, the rotation direction of the liquid crystal molecules in different display areas 01 can be adjusted, thereby compensating the difference in phase difference of the liquid crystal molecules.

Optional, as shown in Fig. 1, the second electrode 20 includes multiple strip-shaped second sub-electrodes 201; the first sub-electrode 101 and the second sub-electrode 201 are alternately disposed in the same layer.

The design of the electrode structure for the second sub-electrodes 201 of the second electrode 20 is not limited, and may be the same as the related art, or may be designed with reference to the first electrode 10.

Here, the first sub-electrode 101 and the second sub-electrode 201 are alternately disposed in the same layer to form an electrode structure of the IPS mode. Since the first sub-electrode 101 and the second sub-electrode 201 are alternately disposed in the same layer, if the materials of the first sub-electrode 101 and the second sub-electrode 201 are the same, the first sub-electrode 101 and the second sub-electrode 201 may be formed simultaneously.

In the embodiment of the present disclosure, the first sub-electrode 101 and the second sub-electrode 201 are alternately disposed in the same layer, the first sub-electrode 101 and the second sub-electrode 201 may form a transverse electric field to drive the liquid crystal molecules to rotate.

Optionally, as shown in Fig. 2, the first electrode 10 and the second electrode 20 are disposed in different layers; the second electrode 20 is a planar electrode. Alternatively, the second electrode 20 includes multiple strip-shaped second sub-electrodes 201, and a second sub-electrode 201 is disposed in a gap between two first sub-electrodes 101.

If the second electrode 20 includes multiple strip-shaped second sub-electrodes 201, the design of the electrode structure for the second sub-electrode 201 of the second electrode 20 is not limited, and may be the same as the related art, or may be designed with reference to the first electrode 10.

Here, the first electrode 10 and the second electrode 20 are disposed in different layers to form an electrode structure of the ADS mode.

In the embodiment of the present disclosure, the liquid crystal molecules are driven to rotate by an electric field generated between the first sub-electrodes 101 in the same plane and an electric field generated by the first electrode 10 and the second electrode 20.

Since each first sub-electrode 101 needs to be electrically connected to a common electrode line (if the first electrode 10 is a common electrode) or to a drain electrode (if the first electrode 10 is a pixel electrode), in order to facilitate the electrical connection between each first sub-electrode 101 and the common electrode line (or, the drain), optionally, in the embodiment of the present disclosure, referring to Fig. 8, the multiple first sub-electrodes 101 are electrically connected by an auxiliary electrode 30 (as shown by the dashed box in Fig. 8, Figs. 1-7(c) also illustrate the auxiliary electrode, which are not labeled). In this way, if the common electrode line or the drain electrode is connected to any one of the first sub-electrodes 101 and the auxiliary electrode 30, all the first sub-electrodes 101 can be electrically connected to the common electrode line or the drain electrode. It is not necessary to electrically connect each first sub-electrode 101 to the common electrode line or the drain electrode, which simplifies the fabrication process of the pixel structure.

The first sub-electrodes 101 are electrically connected to each other through the auxiliary electrode 30. In an embodiment, the first sub-electrodes 101 in the same display area 01 are electrically connected to each other through the auxiliary electrode 30; in another embodiment, the first sub-electrodes 101 located in different display areas 01 are electrically connected by the auxiliary electrode 30. If the first sub-electrode 101 and the second sub-electrode 201 are alternately disposed in the same layer, the first ends of the multiple first sub-electrodes 101 may be electrically connected with each other through the auxiliary electrode 30, and the second ends of the multiple second sub-electrodes 201 may be electrically connected with each other through the auxiliary electrode 30. The first end is opposite to the second end.

On the basis of this, the auxiliary electrode 30 and the first electrode 10 are disposed in the same layer; a material of the auxiliary electrode 30 is the same as a material of the first electrode 10. In this way, the auxiliary electrode 30 and the first electrode 10 can be simultaneously fabricated, thereby simplifying the fabrication process of the pixel structure.

An embodiment of the present disclosure provides an array substrate. As shown in Fig. 9, the array substrate includes the above-described pixel structure. In the example shown in Fig. 9, a pixel structure is depicted and the first electrode 10 is a pixel electrode, but the present disclosure is not limited to this pixel structure.

In addition to the pixel structure, the array substrate may include a thin film transistor 40, a data line 50, a gate line 60, a common electrode line 70, and the like. The thin film transistor 40 includes a source electrode, a drain electrode, an active layer, a gate electrode, a gate insulating layer, and the like, and the drain electrode is electrically connected to the pixel electrode.

The embodiments of the present disclosure provide an array substrate. The pixel structure in the array substrate includes a first electrode and a second electrode. The first electrode includes multiple strip-shaped first sub-electrodes. In the embodiments of the present disclosure, at least one of a distance between two directly adjacent first sub-electrodes, a width of each first sub-electrode, and an inclination angle of each first sub-electrode is not a constant. Since any one of the above parameters may affect the rotation state of the liquid crystal molecules, at least one of the distance between two directly adjacent first sub-electrodes, the width of each first sub-electrode, and the inclination angle of each first sub-electrode may be adjusted to independently control the electric field direction or the electric field intensity of the individual regions, so that the rotation state of the liquid crystal molecules can be changed to compensate the difference in phase difference of the liquid crystal molecules, thereby reducing the color shift phenomenon.

Embodiments of the present disclosure also provide a liquid crystal display device including the above array substrate.

The liquid crystal display device may be any device that displays either varying (for example, video) or stationary (for example, static image) text or image. More specifically, it is contemplated that the described embodiments can be implemented in or associated with a variety of electronic devices such as, but not limited to, mobile phone, wireless device, personal data assistant (PDA), handheld or portable computer, GPS receiver/navigator, camera, MP4 video player, video camera, game console, watch, clock, calculator, TV monitor, flat panel display, computer monitor, car monitor (for example, odometer display, etc.), navigator, cockpit controller and/or display, camera view display (e.g., rear view camera display in vehicle), electronic photo, electronic billboard or signage, projector, building structure, packaging and aesthetic structure (for example, a display for an image of a piece of jewelry), etc. The liquid crystal display panel includes the array substrate, a counter substrate disposed opposite to the array substrate, and a liquid crystal layer disposed between the array substrate and the counter substrate.

The embodiments of the present disclosure provide a liquid crystal display device. The liquid crystal display device includes the above mentioned array substrate. The pixel structure in the array substrate includes a first electrode and a second electrode. The first electrode includes multiple strip-shaped first sub-electrodes. In the embodiments of the present disclosure, at least one of a distance between two directly adjacent first sub-electrodes, a width of each first sub-electrode, and an inclination angle of each first sub-electrode is not a constant. Since any one of the above parameters may affect the rotation state of the liquid crystal molecules, at least one of the distance between two directly adjacent first sub-electrodes, the width of each first sub-electrode, and the inclination angle of each first sub-electrode may be adjusted to independently control the electric field direction or the electric field intensity of the individual regions, so that the rotation state of the liquid crystal molecules can be changed to compensate the difference in phase difference of the liquid crystal molecules, thereby reducing the color shift phenomenon.

The above embodiments are only used for explanations rather than limitations to the present disclosure, the ordinary skilled person in the related technical field, in the case of not departing from the spirit and scope of the present disclosure, may also make various modifications and variations, therefore, all the equivalent solutions also belong to the scope of the present disclosure, the patent protection scope of the present disclosure should be defined by the claims.

## Claims

1. A pixel structure, comprising:
a first electrode and a second electrode for driving liquid crystal molecules to rotate;
wherein the first electrode comprises multiple strip-shaped first sub-electrodes; the pixel structure is divided into *n* display areas, *n* is a positive integer greater than or equal to 2; and each display area is provided with a plurality of first sub-electrodes;
and wherein at least one of a distance between two directly adjacent first sub-electrodes, a width of each first sub-electrode, and an inclination angle of each first sub-electrode is not a constant; the inclination angle is an angle between an extending direction of the first sub-electrode and a reference direction.

2. The pixel structure according to claim 1, wherein in the same display area, the distance between two directly adjacent first sub-electrodes is a constant, and widths of the plurality of first sub-electrodes are equal;
for different display areas in *m* display areas, at least one of a distance between two directly adjacent first sub-electrodes, a width of each first sub-electrode, and an inclination angle of each first sub-electrode is not a constant; 2≤*m*≤n*,* and *m* is a positive integer.

3. The pixel structure according to claim 1, wherein in the same display area, at least one of a distance between directly adjacent first sub-electrodes, a width of each first sub-electrode, and an inclination angle of each first sub-electrode is not a constant.

4. The pixel structure according to claim 3, wherein in the same display area, inclination angles of the first sub-electrodes are equal; two sides of each first sub-electrode are parallel along the extending direction of the first sub-electrode; the distance between directly adjacent first sub-electrodes is not a constant.

5. The pixel structure according to claim 4, wherein for different display areas in *t* display areas, inclination angles of the first sub-electrodes are different; 2≤*t*≤*n,* and *t is a* positive integer.

6. The pixel structure according to claim 3, wherein in the same display area, inclination angles of the first sub-electrodes are equal; two sides of each first sub-electrode are parallel along the extending direction of the first sub-electrode; widths of the first sub-electrodes are not equal.

7. The pixel structure according to claim 6, wherein for different display areas in *t* display areas, inclination angles of the first sub-electrodes are different; 2≤*t*≤*n,* and *t* is a positive integer.

8. The pixel structure according to claim 1, wherein the second electrode comprises multiple strip-shaped second sub-electrodes; the first sub-electrode and the second sub-electrode are alternately disposed in the same layer.

9. The pixel structure according to claim 1, wherein the first electrode and the second electrode are disposed in different layers; the second electrode is a planar electrode.

10. The pixel structure according to claim 1, wherein the first electrode and the second electrode are disposed in different layers; the second electrode comprises multiple strip-shaped second sub-electrodes, and a second sub-electrode is disposed in a gap between two first sub-electrodes.

11. The pixel structure according to claim 1, wherein the multiple first sub-electrodes are electrically connected by an auxiliary electrode; the auxiliary electrode and the first electrode are disposed in the same layer; a material of the auxiliary electrode is the same as a material of the first electrode.

12. The pixel structure according to any one of claims 1-11, wherein a material of the first electrode or a material of the second electrode is at least one of ITO or IZO.

13. The pixel structure according to any one of claims 1-11, wherein in the same display area, all angles of the plurality of first sub-electrodes rotating clockwise to the reference direction are obtuse angles or acute angles; the reference direction is an extending direction of a gate line connected to the pixel structure.

14. An array substrate comprising the pixel structure according to any one of claims 1-13.

15. A liquid crystal display device comprising the array substrate according to claim 14.
